# EUROPÄISCHE PATENTSCHRIFT

(11) **EP 2 810 749 B1**
(45) Veröffentlichungstag und Bekanntmachung des Hinweises auf die Patenterteilung: **29.04.2015**
(21) Anmeldenummer: 13171149.1
(22) Anmeldetag: 07.06.2013
(51) Int. Cl.: B25J 15/00, B23P 21/00, B23Q 7/00, H01R 43/00

(54) **Vorrichtung zur Verwendung beim Handhaben einer Last und Verfahren zum Herstellen einer derartigen Vorrichtung**
Device for use in handling a load and method for producing such a device
Dispositif pour l'utilisation lors de la manipulation d'une charge et procédé de fabrication d'un tel dispositif

(43) Veröffentlichungstag der Anmeldung: 10.12.2014
(73) Patentinhaber: FFT Produktionssysteme GmbH & Co. KG, 36041 Fulda (DE)
(72) Erfinder: Kraft, Martin, 36124 Eichenzell (DE); Schneegans, Dr. Jochen, 56237 Wittgert (DE)
(74) Vertreter: Schuhbießer, Irmgard Gertrud

(56) Entgegenhaltungen:
- EP-A1- 2 465 651
- WO-A1-2005/102618
- DE-U1-202012 102 102
- US-A1- 2007 006 462

## Beschreibung

Die vorliegende Erfindung bezieht sich auf eine Vorrichtung zur Verwendung beim Handhaben einer Last und ein Verfahren zum Herstellen einer derartigen Vorrichtung. Insbesondere bezieht sich die vorliegende Erfindung auf eine Vorrichtung zur Verwendung beim Handhaben einer Last und ein Verfahren zum Herstellen einer derartigen Vorrichtung, die in einer Produktionsanlage zum Einsatz kommen kann. Die Produktionsanlage ist insbesondere eine Fertigungsstraße für ein Fahrzeug.

In Produktionsanlagen für industriell gefertigte Gegenstände, wie beispielsweise Kraftfahrzeuge, Mediengeräte, Möbel, usw., werden üblicherweise einzelne Bauteile des zu fertigenden Gegenstands von einem Ort zum anderen bewegt und/oder das Bauteil um seine Achse geschwenkt und/oder für eine bestimmte Behandlungsweise in einer speziellen Position gehalten, usw. Hierzu wird derzeit im Stand der Technik ein Greifwerkzeug verwendet, das sowohl die Last des Gegenstands handhaben kann als auch ausreichend dimensioniert ist, um den Gegenstand sicher und ausreichend schnell von einer Ausgangsposition in eine gewünschte andere Position zu bewegen und ihn an dieser Position auch zu halten.

Die derzeit in solchen Produktionsanlagen verwendeten Greifwerkzeuge sind vergleichsweise schwer. Dadurch ist wiederum eine Anlage, in die das Greifwerkzeug integriert ist, für eine große Handhabungslast auszulegen. Als weitere Folge davon ist die benötigte Antriebskraft zum Antrieb eines solchen Greifwerkzeugs relativ hoch. Ein weiterer Nachteil besteht darin, dass eine Umrüstung der Produktionsanlage zwischen verschiedenen Greifwerkzeugen, die jeweils für spezielle Greifaufgaben gestaltet sind, relativ zeitaufwändig ist. Dies führt zu langen Stillstandzeiten der Produktionsanlage.

EP 2 465 651 A1 zeigt eine Vorrichtung zur Aufnahme und Handhabung eines Bauteils und ein Verfahren zum Herstellen einer solchen Vorrichtung. Hier ist das Gewicht der Vorrichtung durch Ausführung als Leichtbauwerkstoffblock um ca. 20 bis 50 % gegenüber den bisher bekannten Greifwerkzeugen deutlich reduziert. WO 2005/102618 A1zeigt eine Roboterhandkomponente, die separat von einer weiteren Roboterhandkomponente an ein Montageteil einer Roboterhand montiert werden kann, um eine Last, wie eine Flüssigkristallanzeige (LCD), ein Plasmaanzeigefeld (PDP), einen Halbleiterwafer oder ein mechanische Präzisionsanlage zu transportieren. Jede der zwei einzelnen Roboterhandkomponenten ist aus einem Einzelteil aufgebaut, das aus einem Kernmaterial gebildet ist und das mit einer oder mehreren Prepregmatte(n) überzogen ist. Zudem zeigt US 2007/006462 A1 eine Vorrichtung zum Handhaben von Kraftfahrzeugteilen mit einem rohrförmigen Hauptstrang und mehreren ringförmigen Manschettenelementen, welche wiederum mit einem plattenförmigen Träger mittels Schrauben verbunden sein können.
Es besteht jedoch weiter Bedarf nach einer Vorrichtung zur Verwendung beim Handhaben einer Last, welche ein geringes Eigengewicht hat und dennoch so stabil ist, dass sie Lasten handhaben kann, deren Gewicht das Eigengewicht der Vorrichtung um ein Vielfaches übersteigen können und dabei sehr kostengünstig und flexibel herstellbar und gegebenenfalls an sich ändernde Produktionsbedingungen in der Produktionsanlage einfach und kostengünstig anpassbar ist.

Daher ist es Aufgabe der vorliegenden Erfindung, eine Vorrichtung zur Verwendung beim Handhaben einer Last und ein Verfahren zum Herstellen einer derartigen Vorrichtung bereitzustellen, mit welchen die zuvor genannten Probleme gelöst werden können. Insbesondere soll eine Vorrichtung zur Verwendung beim Handhaben einer Last und ein Verfahren zum Herstellen einer derartigen Vorrichtung bereitgestellt werden, bei welcher die Vorrichtung im Vergleich zu herkömmlichen Vorrichtungen leichtgewichtig, sehr flexibel anpassbar und kostengünstig herstellbar ist.

Diese Aufgabe wird durch eine Vorrichtung zur Verwendung beim Handhaben einer Last nach Patentanspruch 1 gelöst. Die genannte Vorrichtung ist sehr leichtgewichtig, einfach und kostengünstig herstellbar und sehr flexibel und einfach anpassbar. Die Vorrichtung kann an gewünschten Stellen beispielsweise um einen oder mehrere Ausleger für Handhabungseinrichtungen, wie insbesondere Greifer, ergänzt werden, indem der faserverstärkte Kunststoff aufgerauht und dadurch zum Andocken eines weiteren Greifarms vorbereitet wird. Dadurch ist auch eine Reparatur der Vorrichtung einfach möglich. Hierbei können auch Befestigungseinrichtungen, wie Bohrungen für Schrauben usw., Nietung, usw. am Gerüst Halt finden.

"Handhaben" ist hierbei insbesondere zu verstehen als greifen, ansaugen, halten, umsetzen, positionieren an einer bestimmten Stelle, bewegen, wie schwenken, drehen, schieben, heben, usw., tragen, stützen, usw.

Bei der zuvor beschriebenen Vorrichtung ist das Gerüst aus beliebig konfigurierbaren Einzelteilen zusammengesetzt. Das Gerüst erhält durch den Überzug oder eine Ummantelung mit dem faserverstärkten Kunststoff zusätzliche Festigkeit und auch die erforderliche Steifigkeit.

Die zuvor beschriebene Vorrichtung hat bei einer Ausgestaltung mit beispielsweise drei Auslegern, die zum Handhaben beispielsweise eines Karosserieteils eines Fahrzeugs verwendbar ist, ein gegenüber dem Stand der Technik deutlich reduziertes Gewicht. Das Gleiche gilt für andere Ausgestaltungen.

Vorteilhafte weitere Ausgestaltungen der Vorrichtung sind in den abhängigen Patentansprüchen angegeben.

Bei der zuvor beschriebenen Vorrichtung können die mehreren Einzelteile planare Elemente sein, welche mindestens eine Steckeinrichtung umfassen, mit welcher die Einzelteile als das dreidimensionale Gerüst zusammengebaut werden können. Somit ist mit der zuvor beschriebenen Vorrichtung ein leichtes und kostengünstiges Greifsystem in Steckbauweise bereitgestellt.

Die Einzelteile können auch planare Elemente sein, welche ineinandergreifende Steckeinrichtungen umfassen, so dass die Einzelteile formschlüssig als das dreidimensionale Gerüst montiert werden können.

Es besteht die Möglichkeit, dass die Einzelteile mindestens eine Steckeinrichtung umfassen, die als Lasche und Durchgangsöffnung ausgestaltet ist, wobei die Steckeinrichtung derart ausgestaltet ist, dass die Steckeinrichtung eines Einzelteils in eine Durchgangsöffnung eines anderen Einzelteils eingesteckt und anschließend werkzeuglos an dem anderen Einzelteil befestigt werden kann.

Bevorzugt weisen Einzelteile des Gerüsts der Vorrichtung eine Kantenverzahnung auf. Die Kantenverzahnung kann die bei Belastung auftretenden Torsionskräfte besser aufnehmen und kompensieren. Dadurch kann die Stabilität des Gerüsts aus den Einzelteilen noch weiter erhöht werden.

Bei der zuvor genannten Vorrichtung kann das Gerüst mindestens einen Ausleger aufweisen, an dessen Ende eine mechanische oder fluidische Handhabungseinrichtung an einer der mindestens einen Montageeinrichtung angeordnet ist.

Falls die Vorrichtung mehrere Handhabungseinrichtungen aufweist, können diese zum Handhaben eines bei der Produktion des Gegenstands verwendbaren Teils zusammenwirken.

Bei der zuvor genannten Vorrichtung kann der faserverstärkte Kunststoff Kohlefaser und/oder Glasfaser und/oder Basaltfaser und/oder kontinuierlich endlosfaserverstärktes Organomaterial umfassen.

Die Vorrichtung kann zum Handhaben von Bauteilen zur Herstellung eines Fahrzeugs und/oder von Spannrahmen zum Spannen von Bauteilen eines Fahrzeugs bei einer Herstellung der Karosserie eines Fahrzeugs dienen. Zusätzlich oder alternativ ist es auch möglich, um die Vorrichtung mit einer Bewegungsvorrichtung zu koppeln, dass die Vorrichtung eine Kopplungseinrichtung aufweist. Somit kann die Vorrichtung beispielsweise als Tragevorrichtung Verwendung finden.

Die zuvor beschriebene Vorrichtung kann Teil einer Produktionsanlage zur Produktion eines Gegenstands sein. Die Produktionsanlage umfasst zudem mindestens eine Handhabungseinrichtung, die an einer der mindestens einen Montageeinrichtung montiert ist, und eine Bewegungsvorrichtung zur Bewegung der Vorrichtung im Raum.

Die Aufgabe wird zudem durch ein Verfahren zum Herstellen einer Vorrichtung beim Handhaben einer Last nach Patentanspruch 11 gelöst. Das Verfahren erzielt die gleichen Vorteile, wie sie zuvor in Bezug auf die Vorrichtung genannt sind.

Vorteilhafte weitere Ausgestaltungen des Verfahrens sind in den abhängigen Patentansprüchen angegeben.

Der Schritt des Zusammenfügens kann werkzeuglos ausgeführt werden, indem ineinandergreifende Steckeinrichtungen der Einzelteile formschlüssig als das dreidimensionale Gerüst montiert werden.

Möglicherweise hat das Verfahren zudem einen Schritt eines Schneidens, mit einem Laser und/oder einer Fräseinrichtung und/oder einer Stanzeinrichtung und/oder einer Wasserstrahlschneideinrichtung, mehrerer Einzelteile aus einem planaren Werkstoff.

Bei dem Verfahren kann der Schritt des Anbringens von Fasermaterial ein Überziehen des dreidimensionalen Gerüsts mit einem schlauchförmigen Fasermaterial umfassen.

Darüber hinaus ist es möglich, dass der Schritt des Anbringens von Fasermaterial derart ausgeführt wird, dass Öffnungen freiliegen, die zum Anbringen der Vorrichtung an einer Bewegungsvorrichtung zur Bewegung der Vorrichtung im Raum dienen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand von Ausführungsbeispielen näher beschrieben. Es zeigen:
Fig. 1 eine stark vereinfachte Ansicht einer Produktionsanlage mit einer Vorrichtung gemäß einem ersten Ausführungsbeispiel;
Fig. 2 eine vereinfachte dreidimensionale Draufsicht auf die Vorrichtung gemäß dem ersten Ausführungsbeispiel;
Fig. 3 eine vereinfachte dreidimensionale Untersicht unter die Vorrichtung gemäß dem ersten Ausführungsbeispiel;
Fig. 4 eine dreidimensionale Teilunteransicht der Vorrichtung gemäß dem ersten Ausführungsbeispiel;
Fig. 5 eine Darstellung von Einzelteilen eines Teils der Vorrichtung gemäß dem ersten Ausführungsbeispiel;
Fig. 6 eine vereinfachte dreidimensionale Draufsicht auf ein aus den Einzelteilen von Fig. 5 montiertes Gerüst der Vorrichtung gemäß dem ersten Ausführungsbeispiel;
Fig. 7 eine vereinfachte dreidimensionale Untersicht unter das Gerüst von Fig. 6;
Fig. 8 und Fig. 9 jeweils eine Schnittansicht des Gerüsts von Fig. 6;
Fig. 10 eine Draufsicht auf das Gerüst von Fig. 6;
Fig. 11 eine Untersicht unter das Gerüst von Fig. 6;
Fig. 12 ein Detail in Bezug auf das Gerüst von Fig. 6;
Fig. 13 ein Flussdiagramm eines Verfahrens zum Herstellen einer Vorrichtung zum Handhaben einer Last gemäß dem Ausführungsbeispiel;
Fig. 14 ein Detail eines Einzelteils einer Vorrichtung gemäß einem zweiten Ausführungsbeispiel;
Fig. 15 ein Detail eines Einzelteils einer Vorrichtung gemäß einem dritten Ausführungsbeispiel;
Fig. 16 ein Detail eines Einzelteils einer Vorrichtung gemäß einem vierten Ausführungsbeispiel; und
Fig. 17 ein Detail eines Gerüsts einer Vorrichtung gemäß einem fünften Ausführungsbeispiel.

In den Figuren sind gleiche oder funktionsgleiche Elemente, sofern nichts anderes angegeben ist, mit denselben Bezugszeichen versehen.

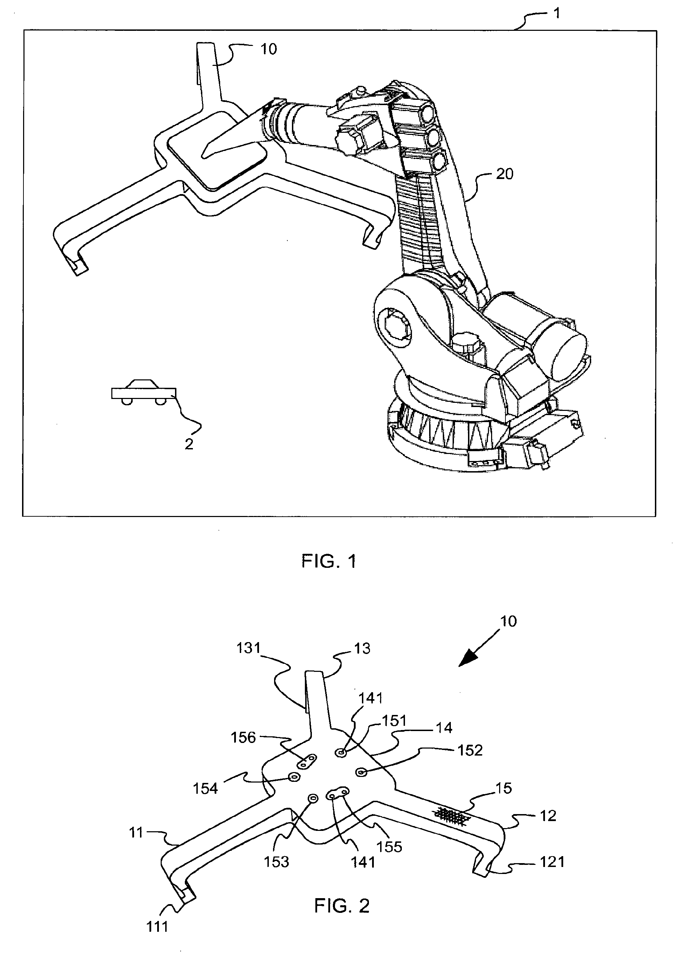

Fig. 1 zeigt eine Produktionsanlage 1 zur Produktion oder Fertigung eines Gegenstands 2 aus mehreren Bauteilen. In Fig. 1 ist der Gegenstand 2 ein Kraftfahrzeug und die Produktionsanlage 1 kann eine Fertigungsstraße für ein Fahrzeug, insbesondere Kraftfahrzeug, Lastkraftfahrzeug, Flugzeug, usw. sein. Die Produktionsanlage 1 ist jedoch nicht darauf beschränkt und kann eine Produktionsanlage für einen beliebigen anderen industriell gefertigten Gegenstand sein.

Die Produktionsanlage 1 in Fig. 1 hat eine Vorrichtung 10 zur Handhabung einer Last, wie beispielsweise ein Bauteil des Gegenstands 2. Das Bauteil kann insbesondere ein Karosserieteil des in Fig. 1 als Kraftfahrzeug gezeigten Gegenstands 2 sein. Das Bauteil kann jedoch auch ein Spannrahmen oder Framer sein, der zum Spannen von Bauteilen eines Fahrzeugs bei einer Herstellung der Karosserie eines Fahrzeugs verwendbar ist. Die Produktionsanlage 1 in Fig. 1 hat außerdem eine Bewegungsvorrichtung 20, an welcher die Vorrichtung 10 angeordnet ist. Hierbei ist die Vorrichtung 10 so an der Bewegungsvorrichtung 20 befestigt, dass die Bewegungsvorrichtung 20 die Vorrichtung 10 im Raum bewegen kann. Dadurch wird auch eine von der Vorrichtung 10 gehandhabte Last im Raum bewegt. in Fig. 1 ist die Bewegungsvorrichtung 20 als Roboter dargestellt. Die Bewegungsvorrichtung 20 kann jedoch auch eine beliebige andere Form haben, wie beispielsweise ein Schwenkarm, eine Hebevorrichtung mit einem Teleskoparm usw.

Fig. 2 zeigt die Vorrichtung 10 in einer Draufsicht genauer. Die Vorrichtung 10 hat einen ersten bis dritten Ausleger 11 bis 13, einen Verbindungskörper 14 zur Verbindung der Ausleger 11 bis 13 und einen Überzug 15, mit welchem die Vorrichtung 10 außen überzogen ist. Der Überzug 15 ist in Fig. 2 nur an einer Stelle genauer angedeutet. An einem Ende des ersten Auslegers 11 ist eine erste Montageeinrichtung 111 angeordnet. An einem Ende des zweiten Auslegers 12 ist eine zweite Montageeinrichtung 121 angeordnet. An einem Ende des dritten Auslegers 13 ist eine dritte Montageeinrichtung 131 angeordnet, die in Fig. 2 kaum sichtbar ist. Ist an den Montageeinrichtung 111, 121, 131 jeweils eine Handhabungseinrichtung beispielsweise in Form eines fluidischen Greifers, insbesondere eines pneumatischen Greifers, und/oder eines mechanischen Greifers, insbesondere Seilzuggreifers, und/oder eines elektrischen Greifers und/oder einer Magnetkupplung montiert, können die Greifer zum Greifen und damit Handhaben einer Last zusammenwirken. Die Handhabungseinrichtung kann jedoch auch ein Werkzeug sein, das bei der Produktion in der Produktionsanlage 1 benötigt wird.

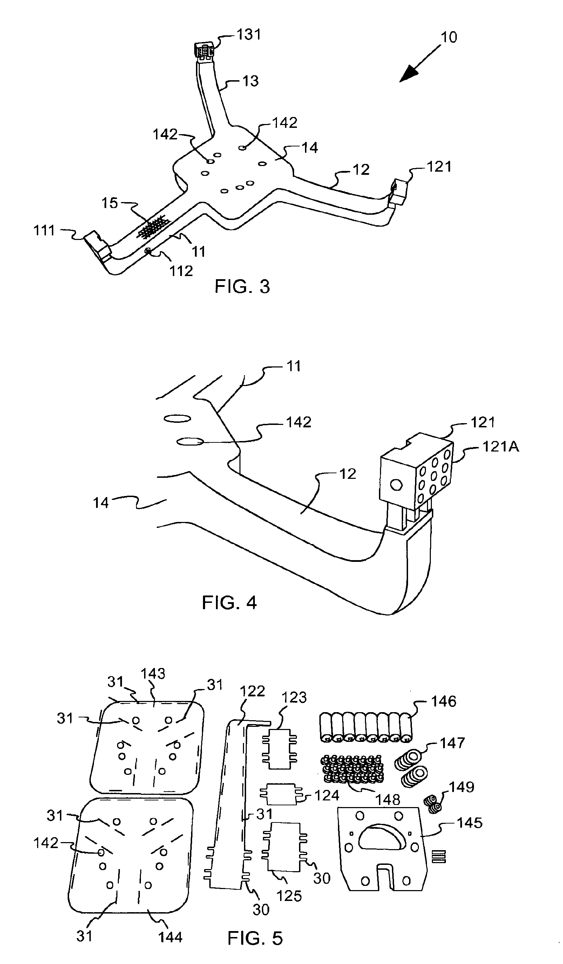

Wie in Fig. 2 gezeigt, sind in dem Verbindungskörper 14 zudem Öffnungen 141 vorgesehen, welche zur Montage der Vorrichtung 10 an der Bewegungsvorrichtung 20 verwendbar sind. Hierbei kann die Montage der Vorrichtung 10 an der Bewegungsvorrichtung 20 auch mittels automatischer An- und Abdockung geschehen. Der Übersichtlichkeit halber sind in Fig. 2 nicht alle Öffnungen 141 mit einem Bezugszeichen versehen. Um die Öffnungen 141 sind Öffnungen 151 bis 156 des Überzugs 15 derart vorgesehen, dass der Überzug 15 nah an die Öffnungen 141 heranreicht, die Öffnungen 141 jedoch freiliegen. Die Öffnungen 141 sind also nicht mit dem Überzug 15 überzogen. Zudem ist an der Vorrichtung 10 in Fig. 3 noch keine Kopplungseinrichtung montiert, mit welchem die Vorrichtung 10 an die Bewegungsvorrichtung 20 gekoppelt ist.

Fig. 3 zeigt die Vorrichtung 10 in einer Untersicht genauer. Hier sind zusätzlich Öffnungen 142 unten an dem Verbindungskörper 14 vorhanden. Der Übersichtlichkeit halber sind in Fig. 3 nicht alle Öffnungen 142 mit einem Bezugszeichen versehen. Zudem ist an der Seite des ersten Auslegers 11 eine Montageeinrichtung 112 in Form einer Öffnung für die Montage eines Werkzeug, einer Kamera, eines Sensors, eines weiteren Greifers oder Ähnliches vorgesehen. Auch hier ist der in Fig. 3 nur angedeutete Überzug 15 um die Montageeinrichtung 112 herum derart vorgesehen, dass der Überzug 15 nah an die Montageeinrichtung 112 heranreicht, die Montageeinrichtung 112 jedoch freiliegt und somit nicht mit dem Überzug 15 überzogen ist.

Fig. 4 zeigt ein Detail von Fig. 3 mit der zweiten Montageeinrichtung 121 genauer. Die zweite Montageeinrichtung 121, wie auch die erste und dritte Montageeinrichtung 111, 131 sind so ausgestaltet, dass an ihr eine Handhabungseinrichtung, wie ein Greifer, ein Werkzeug, eine Kamera oder Ähnliches montiert werden kann. Beispielsweise hat die Montageeinrichtung 121 mehrere Öffnungen 121A, mit welchen eine Handhabungseinrichtung, insbesondere durch Schrauben, usw., befestigt werden kann.

Bei der Vorrichtung 10 von Fig. 1 bis Fig. 4 besteht der Überzug 15 aus einem Verbund aus Kohlefaser und/oder Glasfaser und/oder Basaltfaser mit Harz. Der Überzug 15 ist somit ein faserverstärkter Kunststoff. Der Überzug 15 ist über ein Gerüst laminiert und bringt damit zusätzliche Festigkeit und auch die erforderliche Steifigkeit. Dies ist nachfolgend genauer beschrieben. Alternativ kann der Überzug 15 auch aus kontinuierlich endlosfaserverstärktem Organomaterial, insbesondere Organoblech, bestehen. Ein solches umfasst thermoplastischen Kunststoff. Dadurch kann das kontinuierlich endlosfaserverstärkte Organomaterial durch Erwärmen über die Schmelztemperatur des thermoplastischen Kunststoffs an dem Gerüst angebracht werden und dann auf das Gerüst laminiert werden. Eine weitere Alternative besteht im Aufsprühen von Faserverbundwerkstoffen, welche die gleichen Eigenschaften bieten wie das Fasermaterial.

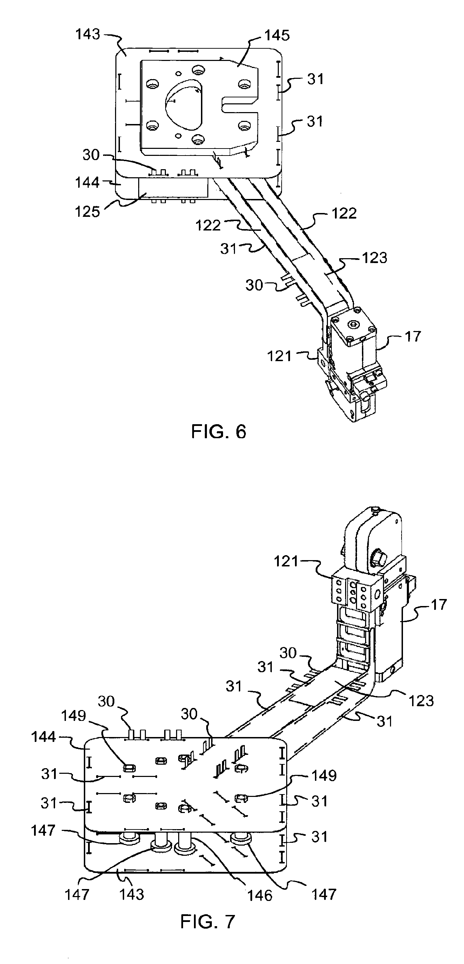

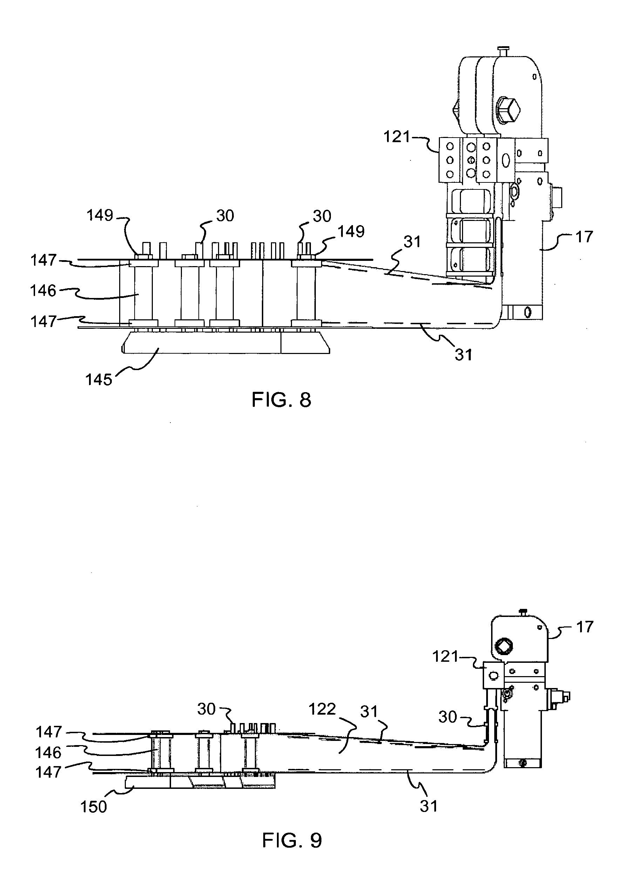

Fig. 5 stellt Einzelteile eines Gerüsts dar, aus denen ein Teil der Vorrichtung 10 zusammengebaut ist, wie in Fig. 6 bis Fig. 11 gezeigt.

Wie aus Fig. 5 ersichtlich, bilden die Einzelteile 143 bis 149 die Einzelteile, aus welchen das Gerüst für den Verbindungskörper 14 mit den Öffnungen 141, 142 zusammengebaut ist. Bei den Einzelteilen 146 bis 149 ist in Fig. 5 der Übersichtlichkeit halber nur eines der Einzelteile mit einem Bezugszeichen versehen. Die Einzelteile 143 und 144 werden durch die Einzelteile 146 bis 149 voneinander beabstandet, indem die Einzelteile 146 bis 149 zwischen oder an den Einzelteilen 143 und 144 montiert werden. Die Einzelteile 146 bis 149 können somit auch als Abstandhalter bezeichnet werden. Das Einzelteil 145 dient später als eine Koppeleinrichtung zum Koppeln der Vorrichtung 10 an die Bewegungsvorrichtung 20. Die Einzelteile 122 bis 125 bilden Einzelteile, aus welchen das Gerüst für den Ausleger 12 zusammengebaut ist. In Fig. 5 ist nur jeweils ein Einzelteil der Einzelteile 122 bis 125 dargestellt, die für den Ausleger 12 verwendet werden. An dem Einzelteil 122 sind Laschen 30 vorgesehen, welche in und durch Durchgangsöffnungen 31 der Einzelteile 143, 144 steckbar sind. Das Einzelteil 122 weist zudem Durchgangsöffnungen 31 auf, in und durch welche Laschen 30 der Einzelteile 123 bis 125 steckbar sind. Eine Lasche 30 und/oder eine Durchgangsöffnung 31 werden nachfolgend auch als Steckeinrichtung 30, 31 bezeichnet. In Fig. 5 sind der Übersichtlichkeit halber nicht alle Laschen 30 und Durchgangsöffnungen 31 der Einzelteile 143, 144, 122 bis 125 mit einem Bezugszeichen versehen.

Die Einzelteile 143 bis 149 und 122 bis 125 können beispielsweise aus Metall, insbesondere Aluminium, Eisen, usw., Kunststoff, Holz und Kombinationen hieraus gefertigt sein. Die Einzelteile 143, 144 und 122 bis 125 können insbesondere aus verzinktem Blech gefertigt sein. Es sind auch andere Materialien denkbar, welche die nötige Grundfestigkeit oder -stabilität für das Gerüst realisieren können.

Fig. 6 bis Fig. 11 zeigen die Vorrichtung 10, an welcher eine Handhabungseinrichtung 17 in Form eines Greifers montiert ist. Der Übersichtlichkeit halber sind nicht alle in Fig. 6 bis Fig. 11 dargestellten Teile mit einem Bezugszeichen versehen.

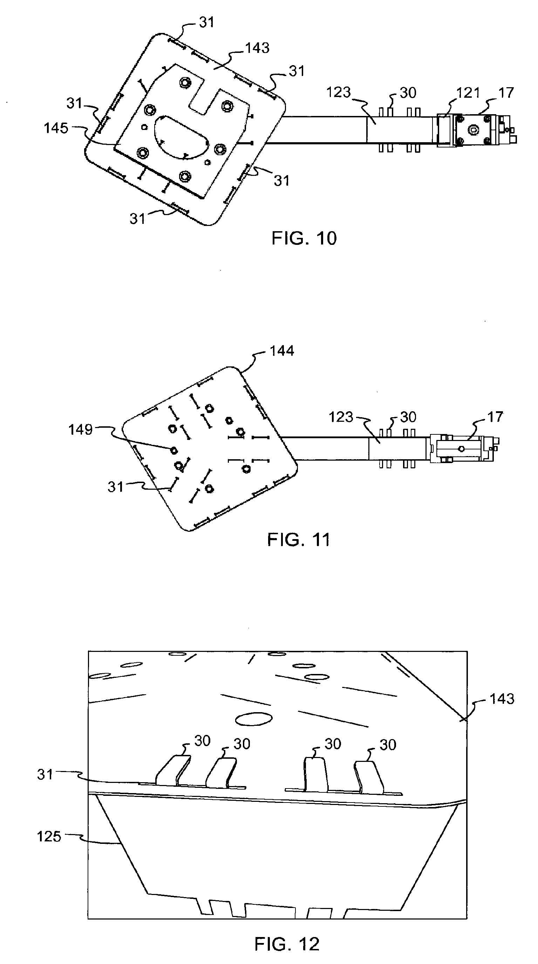

In Fig. 6 bis Fig. 11 sind die Steckeinrichtungen 30, 31 nur teilweise montiert. Demzufolge sind die Laschen 30 der Einzelteile 122 bis 125 zwar in die Durchgangsöffnung 31 gesteckt und bis zum Rand der Einzelteile 143, 144, 122 bis 125 durch die Durchgangsöffnung 31 gesteckt. Jedoch sind die Laschen 30 noch nicht umgebogen und damit befestigt, wie in Fig. 12 für die Einzelteile 143 und 125 gezeigt. Damit sind die Einzelteile in Fig. 6 bis Fig. 11 noch nicht ganz aneinander befestigt. Die Laschen 30 sind hierbei so konzipiert, dass sie einfach mit dem Daumen einer Hand, also werkzeuglos, umgebogen werden können. Es ist also kein weiteres Werkzeug zum Zusammenbau des aus den Einzelteilen 143 bis 149 und 122 bis 125 gebildeten Gerüsts erforderlich. Sollte jedoch eine größere Materialstärke für die Einzelteile 122 bis 125 benötigt werden, kann zumindest eine der Laschen 30 dann eine solche Materialstärke aufweisen, dass sie nicht mehr von Hand bzw. per Daumen umgebogen werden kann. In einem solchen Fall kann für ein Umbiegen der Laschen 30 auch ein Werkzeug verwendet werden.

Sobald das Gerüst aus den Einzelteilen 143 bis 149 und 122 bis 125 zusammengebaut ist, wie zuvor und nachfolgend beschrieben kann es mit dem Überzug 15 versehen werden, wie zuvor und nachfolgend beschrieben.

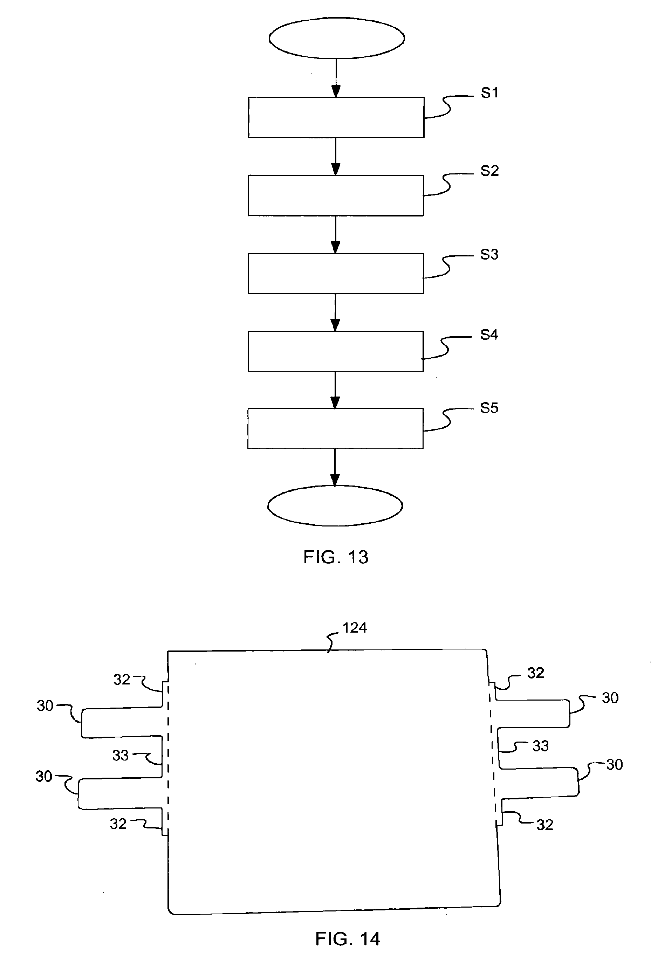

Fig. 13 zeigt sehr schematisch ein Verfahren zum Herstellen der Vorrichtung 10. Hierbei werden nach Beginn des Verfahrens bei einem Schritt S1 mehrere Einzelteile, beispielsweise die Einzelteile 143, 144 und 122 bis 125, aus einem planaren Werkstoff, insbesondere verzinktem Blech, geschnitten. Das Schneiden kann mit einem Laser und/oder einer Fräseinrichtung mittels Fräsen und/oder einer Stanzeinrichtung mittels Stanzen und/oder einer Wasserstrahlschneideinrichtung mittels Wasserschneiden und/oder einem anderen geeigneten situationsbedingten Bearbeitung, wie beispielsweise Funken-Erodieren, Elektroerosion, usw., erfolgen. Hierbei werden auch die Durchgangsöffnungen 31 hergestellt. Danach geht der Fluss zu einem Schritt S2 weiter.

Bei dem Schritt S2 werden die Einzelteile, beispielsweise die Einzelteile 143 bis 149 und 122 bis 125 zusammengefügt. Hierbei werden die Einzelteile derart zusammengefügt, dass sie zusammen das dreidimensionale Gerüst bilden, wie in Fig. 6 bis Fig. 12 veranschaulicht. Das Zusammenfügen kann werkzeuglos ausgeführt werden, indem ineinandergreifende Steckeinrichtungen der Einzelteile formschlüssig als das dreidimensionale Gerüst montiert werden. Bei diesem Schritt werden auch die Montageeinrichtungen 111, 121, 131 und gegebenenfalls auch die Handhabungseinrichtungen 17 bereits an dem Gerüst an ihrer jeweiligen Soll-Position montiert. Danach geht der Fluss zu einem Schritt S3 weiter.

Bei dem Schritt S3 wird um das dreidimensionale Gerüst herum, das bei dem Schritt S2 hergestellt wurde, Fasermaterial angebracht, um den Überzug 15 herzustellen. Dies kann beispielsweise ein Überziehen des dreidimensionalen Gerüsts mit einem schlauchförmigen Fasermaterial umfassen. Alternativ oder zusätzlich können auch einzelne Fasern oder Fasermatten an dem Gerüst angebracht, insbesondere aufgelegt, werden. Je nach gewünschter Stabilität und Tragkraft der Vorrichtung 10 kann das Fasermaterial in einer Schicht oder mehreren Schichten an dem Gerüst angebracht werden. Hierbei ist es auch möglich, dass das Fasermaterial nur an vorbestimmten Stellen des Gerüsts ein- oder mehrlagig angebracht wird. Beispielsweise können an Stellen des Gerüsts, an denen größere Kräfte wirken werden, mehr Schichten des Fasermaterials angebracht werden als an Stellen des Gerüsts, an denen kleinere Kräfte wirken werden. Zudem wird das Fasermaterial derart angebracht, dass alle Öffnungen freiliegen, die zum Anbringen der Vorrichtung an der Bewegungsvorrichtung 20 oder zum Anbringen einer Handhabungseinrichtung usw. dienen sollen. Danach geht der Fluss zu einem Schritt S4 weiter.

Bei dem Schritt S4 wird auf das bei dem Schritt S3 angebrachte Fasermaterial Harz aufgebracht. Das Aufbringen kann beispielsweise mit einem Pinsel erfolgen. Hierbei ist es ausreichend, dass das Harz zwischen den Fasern des Fasermaterials vorhanden ist. Überschüssiges Harz kann einfach abgestrichen werden. Das harzgetränkte Fasermaterial, das im Falle eines Gewebes auch als Laminierungsmatten bezeichnet werden kann, ähnelt einem nassen Gewebe. Der Schritt S4 kann beispielsweise entfallen, wenn das Fasermaterial mit Harz als Faserverbundwerkstoff aufgesprüht wird. Zudem können der Schritt S3 und S4 auch als ein gemeinsamer Fertigungsschritt angesehen werden, wenn das Fasermaterial aufgelegt und per Harzanstrich simultan aufgetragen wird. Danach geht der Fluss zu einem Schritt S5 weiter.

Bei dem Schritt S5 wird der bei dem Schritt S3 gebildete Harz/Fasermaterialverbund als faserverstärkter Kunststoff ausgehärtet und somit der Überzug 15 des Gerüsts der Vorrichtung 10 gebildet. Die Aushärtung kann je nach gewählter Laminierungsart entweder eine Kalt- oder eine Warmaushärtung sein. Durch das Einlaminieren des Gerüsts wird zum einen der Konstruktion der Vorrichtung 10 zusätzliche Festigkeit und Steifigkeit verliehen. Zum anderen wird dadurch auch ein wieder Aufbiegen der durch die Durchgangsöffnungen 31 durchragenden Laschen 30 vermieden. Das Gerüst wird nach außen mit Ausnahme der Öffnungen 141, 142, 112 abgeschlossen, so dass ein Eindringen von Fremdstoffen, wie Staub, einer Flüssigkeit, usw. verhindert wird. Danach ist das Verfahren beendet.

Somit ist ein Baukastenmodul für die Vorrichtung 10 bereitgestellt, mit welches es möglich wird, ein leichtes kostengünstiges Greifsystem in Steckbauweise zu erstellen. Das Gerüst der Vorrichtung 10 erhält durch die Ummantelung mit dem Fasermaterial zusätzliche Festigkeit. Zudem kann die erforderliche Steifigkeit der Vorrichtung 10 gewährleistet werden.

Fig. 14 zeigt das Einzelteil 124 im Detail, welches Einzelteil 124 für ein Gerüst einer Vorrichtung 10 gemäß einem zweiten Ausführungsbeispiel verwendet wird. Die Vorrichtung 10 gemäß dem vorliegenden Ausführungsbeispiel ist in weiten Teilen auf die gleiche Weise ausgeführt, wie in Bezug auf das erste Ausführungsbeispiel beschrieben. Daher sind nachfolgend nur die Unterschiede zu dem ersten Ausführungsbeispiel beschrieben.

Das in Fig. 14 gezeigte Einzelteil 124 hat eine Zentrier-Steckeinrichtung, die in Fig. 14 zwei Laschen 30, zwei Nasen 32 und einen Steg 33 umfasst. Hierbei ist der Steg 33 zwischen den beiden Laschen 30, also an einer ihrer Seiten, angeordnet. An der anderen Seite einer Lasche 30 ist eine der Nasen 32 angeordnet. Die Nasen 32 und der Steg 33 kragen jeweils etwas aus der Kante des Einzelteils 124 aus, wie durch die gestrichelten Linien in Fig. 14 veranschaulicht. Demgegenüber kragen die beiden Laschen 30 jeweils um ein Vielfaches weiter aus der Kante des Einzelteils 124 aus als die Nasen 32. Vorzugsweise kragen die Nasen 32 und gegebenenfalls der Steg 33 so weit aus der Kante des Einzelteils 124 aus, dass sie in eine Durchgangsöffnung 31 eines anderen Einzelteils, in diesem Fall eines Einzelteils 122, eingreifen können, jedoch nicht aus der Durchgangsöffnung 31 auskragen, wenn die Laschen 30 umgebogen sind, wie in Fig. 12 beim ersten Ausführungsbeispiel gezeigt.

Die Gesamtbreite der Laschen 30, der Nasen 32 und des Stegs 33 an der Kante des Einzelteils 124 ist etwas kleiner als die Breite einer Durchgangsöffnung 31, so dass die Laschen 30, Nasen 32 und der Steg 33 des Einzelteils 124 einen Formschluss mit der Durchgangsöffnung 31 des Einzelteils 122 bilden, wenn sie an diesem in ähnlicher Weise montiert sind, wie in Fig. 6 bis Fig. 12 für die Einzelteile 123, 125 gezeigt. Die Gesamtbreite entspricht der Länge einer der gestrichelten Linien in Fig. 14. Der Formschluss wirkt zentrierend als Verrutschsicherung für die ineinandereingreifenden Einzelteile 122 bis 125, 143, 144 und trägt damit auch zur Bauteilsteifigkeit bei. Die Bauteilsteifigkeit bezieht sich hierbei sowohl auf das aus den Einzelteilen 122 bis 125, 143 bis 149 gebaute Gerüst als auch die damit fertiggestellte Vorrichtung 10.

Die anderen Einzelteile der Vorrichtung 10, an welchen Laschen 30 vorhanden sind, können auf die gleiche Weise wie das Einzelteil 124 mit Laschen 30 und Nasen 32 ausgeführt sein.

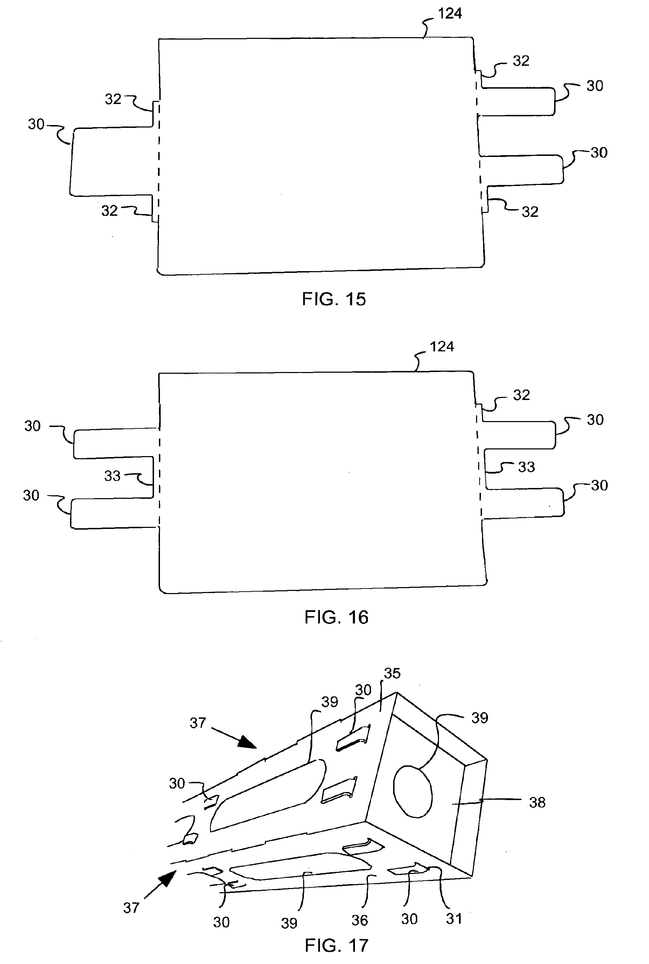

Gemäß einem dritten Ausführungsbeispiel umfasst die Zentrier-Steckeinrichtung keinen Steg 33, wie in Fig. 15 gezeigt. Gemäß einer ersten Modifikation ist hierbei nur eine Lasche 30 vorhanden, an deren Seiten jeweils eine Nase 32 angeordnet ist, wie in Fig. 15 an der linken Kante des Einzelteils 124 veranschaulicht. Gemäß einer zweiten Modifikation sind zwar zwei Laschen 30 vorhanden, an deren Seiten jeweils eine Nase 32 angeordnet ist, wie in Fig. 15 an der rechten Kante des Einzelteils 124 veranschaulicht. Jedoch kragt die Kante des Einzelteils 124 zwischen den Laschen 30 nicht aus, sondern liegt beispielsweise auf der gleichen Gerade wie die Kante des Einzelteils 124. Alternativ kann die Kante des Einzelteils 124 zwischen den Laschen 30 auch gegenüber der sonstigen Kante des Einzelteils 124 aus dem Einzelteil 124 ausgekerbt sein.

Gemäß einem vierten Ausführungsbeispiel umfasst die Zentrier-Steckeinrichtung keine Nasen 32, wie in Fig. 16 an der linken Kante des Einzelteils 124 gezeigt. Alternativ kann auch nur eine Nase 32 vorhanden sein, wie in Fig. 16 an der rechten Kante des Einzelteils 124 gezeigt. In diesem Fall wird der Formschluss zwischen den Einzelteilen 122 bis 125, 143, 144 für die Verrutschsicherung mittels zumindest den Laschen 30 und gebenenfalls einer Nase 32 ausgebildet.

Gemäß einem fünften Ausführungsbeispiel weisen Einzelteile 35, 36 des Gerüsts der Vorrichtung 10 eine Kantenverzahnung 37 auf, wie in Fig. 17 gezeigt. Hierbei sind die Kanten der Einzelteile 35, 36 so ausgebildet, dass sie ineinandergreifen, wenn die Einzelteile 35, 36 an ihren Kanten aneinandergebracht werden. Die Einzelteile 35, 36 sind mit einem Einzelteil 38 und weiteren nicht sichtbaren Einzelteilen 35, 36 zu einem Vierkantprofil zusammengebaut, bei welchem das Einzelteil 38 einen im Vierkantprofil angeordneten Deckel bildet. Das Einzelteil 38 hat Laschen 30, die in Fig. 17 durch die Durchgangsöffnungen 31 der Einzelteile 35, 36 geführt und an die Einzelteile 35, 36 gebogen sind. Der Übersichtlichkeit halber in Fig. 17 nicht alle Laschen 30 und Durchgangsöffnungen 31 mit einem Bezugszeichen versehen. Die Einzelteile 35, 36, 38 haben Öffnungen 39, die in Fig. 17 ebenfalls als Durchgangsöffnungen 39 ausgebildet sind, so dass das Gerüst noch leichter wird. Die Öffnungen 39 können insbesondere als Langloch oder Rundloch ausgeführt sein, wie in Fig. 17 gezeigt. Es sind jedoch auch andere Formen für die Öffnungen 39 denkbar. Je nach Materialstärke können die Öffnungen 39 auch ein Sackloch bilden.

Wie in Fig. 17 gezeigt, sind bei dem Gerüst aus den Einzelteilen 35, 36, 38 mit der Kantenverzahnung 37 die Biegelaschen 30 nicht im Randbereich des Einzelteils 35 angeordnet, wie bei den vorangegangenen Ausführungsbeispielen beschrieben, sondern weiter innenliegend an dem Einzelteil 36 angeordnet. Dadurch wird das aus den Einzelteilen 35, 36 und einem Einzelteil 38 gebildete Gerüst noch stabiler.

Bei diesem Ausführungsbeispiel kann es nicht zu Materialausrissen oder Materialabrissen im Randbereich der Einzelteile 35, 36, 38 kommen. Darüber hinaus entstehen hierbei keine scharfkantigen Formen, die durch leichtes Füllmaterial aufgefüllt werden müssten, wie sie bei den vorangehenden Ausführungsbeispielen gegebenenfalls vorhanden sind.

Die Kantenverzahnung kann bei dem Verfahren, das in Bezug auf Fig. 13 beschrieben ist, bei dem Schritt S1 durch Schneiden oder Herauslösen der gewünschten Kerbungen an den Einzelteilen 35, 36 vorbereitet werden.

Alle zuvor beschriebenen Ausgestaltungen der Vorrichtung und des Verfahrens können einzeln oder in allen möglichen Kombinationen Verwendung finden. Insbesondere ist eine beliebige Kombination der Merkmale des ersten bis fünften Ausführungsbeispiels möglich. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Die Form der Vorrichtung 10 ist beliebig wählbar. Insbesondere kann die Anzahl der Ausleger 11, 12, 13 frei gewählt werden. Insbesondere ist auch nur ein Ausleger oder kein Ausleger möglich. Zudem ist die Anzahl der Verbindungskörper 14 beliebig wählbar. Das Gleiche gilt für die Form der Ausleger 11, 12, 13 und des Verbindungskörpers 14.

Bei dem Gerüst der Vorrichtung 10 sind die Kanten der Einzelteile vorzugsweise abgerundet ausgeführt. Bevorzugt sind Konstruktionen, die keine scharfkantigen Formen aufweisen. Damit wird das Einlaminieren mit dem Fasermaterial begünstigt. Beispielsweise kann auf das Bauteil 125 Füllmaterial aus Leichtbaustoffen, wie Pappe, Filz, usw., aufgebracht werden, um den zwischen den Bauteilen 125, 143 in Fig. 12 dargestellten Versatz auszugleichen. Dadurch kann der Biegeradius der Fasern des Fasermaterials optimiert werden.

Es ist auch möglich, dass ein oder mehrere Einzelteile des Gerüsts der Vorrichtung 10 aus einem rohrförmigen Material bestehen. Da jedoch planare Einzelteile zumeist einfacher und/oder kostengünstiger formbar, transportierbar und verarbeitbar sind, werden planare Einzelteile bevorzugt.

Die Steckeinrichtung kann anstelle einer Lasche 30 auch als Snaphaken und/oder Schweißspriegel ausgeführt sein. Es sind selbstverständlich auch andere Formen für die Steckeinrichtung möglich. Dementsprechend ist die Durchgangsöffnung 31 auszubilden, in welche der Snaphaken und/oder Schweißspriegel, usw. eingreifen soll. Es ist auch eine Kombination aus Lasche 30 und Snaphaken oder eine Kombination aus Lasche 30 und Schweißspriegel möglich. Zudem können auch Lasche 30, Snaphaken und Schweißspriegel für eine Steckeinrichtung kombiniert werden. Alternativ können für eine Steckeinrichtung auch mehr als eine Lasche 30 und/oder Snaphaken und/oder Schweißspriegel zum Einsatz kommen.

Die Schritte S1 und/oder S2 des Verfahrens können auch schon von einem anderen Hersteller als demjenigen Hersteller ausgeführt sein, welcher den Überzug 15 mittels der Schritte S3 bis S5 herstellt. Insbesondere kann auch ein Baukastensystem mit den Einzelteilen gemäß Fig. 5 geliefert werden, so dass ein Hersteller der Vorrichtung 10 nur noch die Schritte S2 bis S5 auszuführen braucht.

Auch wenn die Geweberichtung der einzelnen Schichten des Fasermaterials bei dem Schritt S3 in vielen Fällen unerheblich ist, so kann ein Überkreuzen der Geweberichtung bei nebeneinanderliegenden Schichten von Fasermaterial eine größere Stabilität und Festigkeit der Vorrichtung 10 zur Folge haben. Daher wird ein kreuzweises Verlegen der Schichten von Fasermaterial in Bezug darauf bevorzugt. Bevorzugt wird die Faser in Richtung der zu erwartenden Belastung ausgerichtet, um die Kräfte optimal aufzunehmen.

Auch wenn es zuvor beschrieben ist, dass der Überzug 15 das Gerüst nach außen mit Ausnahme der Öffnungen 141, 142, 112 abschließt, so ist dies nicht zwingend erforderlich. Beispielsweise ist es, insbesondere im extremen Leichtbau, möglich, dass der Überzug 15 und damit das Fasermaterial für den Überzug 15 nur auf einer Seite des Gerüsts angebracht wird.

## Patentansprüche

1. Vorrichtung (10) zur Verwendung beim Handhaben einer Last, mit
einem dreidimensionalen Gerüst, das mehrere Einzelteile (143 bis 149, 122 bis 125; 35, 36, 38) umfasst, wobei zumindest ein Teil der Einzelteile (143 bis 149, 122 bis 125; 35, 36, 38) planare Elemente sind, welche mindestens eine Steckeinrichtung (30, 31) umfassen, mit welcher die Einzelteile (143, 144, 122 bis 125; 35, 36, 38) als das dreidimensionale Gerüst zusammengebaut werden können,
einem Überzug (15) aus einem faserverstärkten Kunststoff, mit welchem das Gerüst überzogen ist, und
mindestens einer Montageeinrichtung (111, 121, 131) für eine Handhabungseinrichtung (17) zum Handhaben eines bei einer Produktion eines Gegenstands (2) verwendbaren Teils, das die Last bildet.

2. Vorrichtung (10) nach Anspruch 1, wobei die mehreren Einzelteile (143, 144, 122 bis 125; 35, 36, 38) planare Elemente sind, welche mindestens eine Steckeinrichtung (30, 31) umfassen, mit welcher die Einzelteile (143, 144, 122 bis 125; 35, 36, 38) als das dreidimensionale Gerüst zusammengebaut werden können.

3. Vorrichtung (10) nach Anspruch 1 oder 2, wobei die Einzelteile (143, 144, 122 bis 125; 35, 36, 38) planare Elemente sind, welche ineinandergreifende Steckeinrichtungen (30, 31) umfassen, so dass die Einzelteile (143, 144, 122 bis 125; 35, 36, 38) formschlüssig als das dreidimensionale Gerüst montiert werden können.

4. Vorrichtung (10) nach Anspruch 2 oder 3, wobei die Einzelteile (143, 144, 122 bis 125; 35, 36, 38) mindestens eine Steckeinrichtung (30, 31) umfassen, die als Lasche (30) oder Durchgangsöffnung (31) ausgestaltet ist, wobei die Steckeinrichtung (30, 31) derart ausgestaltet ist, dass die Lasche (30) eines Einzelteils (125; 38) in eine Durchgangsöffnung (31) eines anderen Einzelteils (143; 35, 36) eingesteckt und anschließend werkzeuglos an dem anderen Einzelteil (143; 35, 36) befestigt werden kann.

5. Vorrichtung (10) nach einem der vorangehenden Ansprüche, wobei Einzelteile (35, 36) des Gerüsts der Vorrichtung (10) eine Kantenverzahnung (37) aufweisen.

6. Vorrichtung (10) nach einem der vorangehenden Ansprüche, wobei das Gerüst mindestens einen Ausleger (11, 12, 13) aufweist, an dessen Ende eine mechanische oder fluidische Handhabungseinrichtung (17) an einer der mindestens einen Montageeinrichtung (111, 121, 131) angeordnet ist.

7. Vorrichtung (10) nach einem der vorangehenden Ansprüche, wobei die Vorrichtung mehrere Handhabungseinrichtungen aufweist, welche zum Handhaben eines bei der Produktion des Gegenstands verwendbaren Teils zusammenwirken.

8. Vorrichtung (10) nach einem der vorangehenden Ansprüche, wobei der faserverstärkte Kunststoff Kohlefaser und/oder Glasfaser und/oder Basaltfaser und/oder kontinuierlich endlosfaserverstärktes Organomaterial umfasst.

9. Vorrichtung (10) nach einem der vorangehenden Ansprüche, wobei die Vorrichtung zum Handhaben von Bauteilen zur Herstellung eines Fahrzeugs und/oder von Spannrahmen zum Spannen von Bauteilen eines Fahrzeugs bei einer Herstellung der Karosserie eines Fahrzeugs dient, und/oder eine Kopplungseinrichtung zum Koppeln der Vorrichtung an einer Bewegungsvorrichtung zur Bewegung der Vorrichtung im Raum aufweist.

10. Produktionsanlage (1) zur Produktion eines Gegenstands (2), mit
einer Vorrichtung (10) nach einem der vorangehenden Ansprüche,
mindestens einer Handhabungseinrichtung (17), die an einer der mindestens einen Montageeinrichtung (111, 121, 131) montiert ist, und
einer Bewegungsvorrichtung (20) zur Bewegung der Vorrichtung (10) im Raum.

11. Verfahren zum Herstellen einer Vorrichtung (10) zur Verwendung beim Handhaben einer Last, mit den Schritten
Zusammenfügen (S2) von Einzelteilen (143 bis 149, 122 bis 125; 35, 36, 38) derart, dass sie zusammen ein dreidimensionales Gerüst bilden, an welchem mindestens eine Montageeinrichtung (111, 121, 131) für eine Handhabungseinrichtung (17) zum Handhaben eines bei einer Produktion eines Gegenstands (2) verwendbaren Teils als die Last vorgesehen ist, wobei zumindest ein Teil der Einzelteile (143 bis 149, 122 bis 125; 35, 36, 38) planare Elemente sind, welche mindestens eine Steckeinrichtung (30, 31) umfassen, mit welcher die Einzelteile (143, 144, 122 bis 125; 35, 36, 38) als das dreidimensionale Gerüst zusammengebaut werden,
Anbringen (S3) von Fasermaterial um das dreidimensionale Gerüst herum,
Aufbringen (S4) von Harz auf das Fasermaterial, und
Aushärten (S5) des Harz/Fasermaterialverbunds als faserverstärkter Kunststoff als Überzug (15) des Gerüsts.

12. Verfahren nach Anspruch 11, wobei der Schritt des Zusammenfügens (S2) werkzeuglos ausgeführt wird, bei dem ineinandergreifende Steckeinrichtungen (30, 31) der Einzelteile (143, 144, 122 bis 125; 35, 36, 38) formschlüssig als das dreidimensionale Gerüst montiert werden.

13. Verfahren nach Anspruch 11 oder 12, zudem mit einem Schritt eines Schneidens (S1), mit einem Laser und/oder einer Fräseinrichtung und/oder einer Stanzeinrichtung und/oder einer Wasserstrahlschneideinrichtung, mehrerer Einzelteile aus einem planaren Werkstoff.

14. Verfahren nach einem der Ansprüche 11 bis 13, wobei der Schritt des Anbringens (S3) von Fasermaterial ein Überziehen des dreidimensionalen Gerüsts mit einem schlauchförmigen Fasermaterial umfasst.

15. Verfahren nach einem der Ansprüche 11 bis 14, wobei der Schritt des Anbringens (S3) von Fasermaterial derart ausgeführt wird, dass Öffnungen (141, 142, 112) freiliegen, die zum Anbringen der Vorrichtung (10) an einer Bewegungsvorrichtung (20) zur Bewegung der Vorrichtung (10) im Raum dienen.

## Claims

1. Device (10) for use in handling a load, the device comprising
a three-dimensional scaffold that comprises multiple individual components (143 to 149, 122 to 125; 35, 36, 38), wherein at least one part of the individual components (143 to 149, 122 to 125; 35, 36, 38) are planar elements which comprise at least one plug means (30, 31) with which the individual components (143, 144, 122 to 125; 35, 36, 38) can be assembled as the three-dimensional scaffold,
a coating (15) made from a fibre-reinforced plastics with which the scaffold is coated, and
at least one mounting means (111, 121, 131) for a handling means (17) for handling a part which is usable in a production of an object (2) and which forms the load.

2. Device (10) according to claim 1, wherein the multiple individual components (143, 144, 122 to 125; 35, 36, 38) are planar elements which comprise at least one plug means (30, 31) with which the individual components(143, 144, 122 to 125; 35, 36, 38) can be assembled as the three-dimensional scaffold.

3. Device (10) according to claim 1 or 2, wherein the individual components (143, 144, 122 to 125; 35, 36, 38) are planar elements which comprise interlocking plug means (30, 1) so that the individual components (143, 144, 122 to 125; 35, 36, 38) can be mounted form-locked as the three-dimensional scaffold.

4. Device (10) according to claim 2 or 3, wherein the individual components (143, 144, 122 to 125; 35, 36, 38) comprise at least one plug means (30, 31) which is configured as a lash (30, 31) or through opening (31), wherein the plug means (30, 31) is configured such that the lash (30) of an individual component (125; 38) can be plugged in a through opening (31) of another individual component (143; 35, 36) and, thereafter, can be fastened to the other individual component (143; 35, 36), no tools needed.

5. Device (10) according to one of the preceding claims, wherein individual components (35, 36) of the scaffold of the device (10) comprise an edge indentation (37).

6. Device (10) according to one of the preceding claims, wherein the scaffold comprises at least one cantilever (11, 12, 13) at the end of which is positioned a mechanical or fluidic handling means (17) at one of the at least one mounting means (111, 121, 131).

7. Device (10) according to one of the preceding claims, wherein the device comprises multiple handling means which cooperate for handling a part usable in the production of the object.

8. Device (10) according to one of the preceding claims, wherein the fibre-reinforced plastics comprises carbon fibre and/or glass fibre and/or basalt fibre and/or continuous filament-reinforced organo material.

9. Device (10) according to one of the preceding claims, wherein the device serves for handling of construction components for producing a vehicle and/or of clamping frames for clamping construction components of a vehicle in producing the body of a vehicle, and/or comprises a coupling means for coupling the device to a moving device for moving the device in the space.

10. Production facility (1) for producing an object (2), comprising
a device (10) according to one of the preceding claims,
at least one handling means (17) which is mounted to one of the at least one mounting means (111, 121, 131), and
a moving device (20) for moving the device (10) in the space.

11. Method for producing a device (10) for use in handling a load, the method comprising the steps of
assembling (S2) individual components (143 to 149, 122 to 125; 35, 36, 38) such that they form together a three-dimensional scaffold at which is provided at least one mounting means (111, 121, 131) for a handling means (17) for handling one part which is usable in a production of an object (2) and which is provided as the load, wherein at least one part of the individual components (143 to 149, 122 to 125; 35, 36, 38) are planar elements which comprise at least one plug means (30, 31) with which the individual components (143 to 149, 122 to 125; 35, 36, 38) are assembled as the three-dimensional scaffold,
attaching (S3) fibre material around the three-dimensional scaffold,
applying (S4) resin to the fibre material and,
curing (S5) the resin/fibre material composite as fibre-reinforced plastics as coating (15) of the scaffold.

12. Method according to claim 11, wherein the step of assembling (S2) is executed without a tool and in which step interlocking plug means (30, 31) of the individual components (143, 144, 122 to 125; 35, 36, 38) are mounted form-closed as the three-dimensional scaffold.

13. Method according to claim 11 or 12, further comprising a step of cutting (S1), with a laser and/or a milling means and/or a punch means and/or a water jet cutting means, multiple individual components from a planar basic material.

14. Method according to one of the claims 11 to 13, wherein the step of attaching (S3) fibre material comprises covering the three-dimensional scaffold with a tubular fibre material.

15. Method according to one of the claims 11 to 14, wherein the step of attaching (S3) fibre material is executed such that openings (141, 142, 112) stand free, which serve for attaching the device (10) to a moving device (20) for moving the device (10) in the space.

## Revendications

1. Dispositif (10) à utiliser dans la manipulation d'une charge, le dispositif comprenant
un échafaudage tridimensionnel qui comprend de multiples composants individuels (143 à 149, 122 à 125; 35, 36, 38), dans lequel au moins une partie des composants individuels (143 à 149, 122 à 125; 35, 36, 38) sont des éléments plans qui comprennent au moins un moyen formant bouchon (30, 31) avec lequel les composants individuels (143, 144, 122 à 125; 35, 36, 38) peuvent être assemblés en tant que l'échafaudage tridimensionnel,
un revêtement (15) constitué de plastique renforcé de fibres avec lequel l'échafaudage est revêtu, et
au moins un moyen de montage (111, 121, 131) pour un moyen de manipulation (17) permettant de manipuler une partie qui est utilisable dans la production d'un objet(2) et qui forme la charge.

2. Dispositif (10) selon la revendication 1, dans lequel les multiples composants individuels (143, 144, 122 à 125; 35, 36, 38) sont des éléments plans qui comprennent au moins un moyen formant bouchon (30, 31) avec lequel les composants individuels (143, 144, 122 à 125; 35, 36, 38) peuvent être assemblés en tant que l'échafaudage tridimensionnel.

3. Dispositif (10) selon la revendication 1 ou 2, dans lequel les composants individuels (143, 144, 122 à 125; 35, 36, 38) sont des éléments plans qui comprennent des moyens formant bouchon de verrouillage (30, 31) de sorte que les composants individuels (143, 144, 122 à 125; 35, 36, 38) puissent être montés par complémentarité de forme en tant que l'échafaudage tridimensionnel.

4. Dispositif (10) selon la revendication 2 ou 3, dans lequel les composants individuels (143, 144, 122 à 125; 35, 36, 38) comprennent au moins un moyen formant bouchon (30, 31) qui est configuré comme une lanière (30, 31) ou une ouverture traversante (31), dans lequel le moyen formant bouchon (30, 31) est configuré de telle sorte que la lanière (30) d'un composant individuel (125; 38) puisse être bouchée dans une ouverture traversante (31) d'un autre composant individuel (143; 35, 36) et, par la suite, puisse être assujetti à l'autre composant individuel (143; 35, 36), sans avoir besoin d'outils.

5. Dispositif (10) selon l'une des revendications précédentes, dans lequel des composants individuels (35, 36) de l'échafaudage du dispositif (10) comprennent une indentation de bord (37).

6. Dispositif (10) selon l'une des revendications précédentes, dans lequel l'échafaudage comprend au moins un porte-à-faux (11, 12, 13) à l'extrémité duquel est positionné un moyen de manipulation mécanique ou fluidique (17) au niveau de l'un du au moins un moyen de montage (111, 121, 131).

7. Dispositif (10) selon l'une des revendications précédentes, dans lequel le dispositif comprend de multiples moyens de manipulation qui coopèrent pour manipuler une partie utilisable dans la production de l'objet.

8. Dispositif (10) selon l'une des revendications précédentes, dans lequel le plastique renforcé de fibres comprend un organomatériau renforcé de fibres de carbone et/ou de fibres de verre et/ou de fibres de basalte et/ou de filaments continus.

9. Dispositif (10) selon l'une des revendications précédentes, dans lequel le dispositif sert à manipuler des composants de construction pour produire un véhicule et/ou de cadres de bridage permettant de brider des composants de construction d'un véhicule dans la production de la carrosserie d'un véhicule, et/ou comprend un moyen de couplage permettant de coupler le dispositif à un dispositif de déplacement permettant de déplacer le dispositif dans l'espace.

10. Installation de production (1) permettant de produire un objet (2), comprenant
un dispositif (10) selon l'une des revendications précédentes,
au moins un moyen de manipulation (17) qui est monté sur l'un du au moins un moyen de montage (111, 121, 131), et
un dispositif de déplacement (20) permettant de déplacer le dispositif (10) dans l'espace.

11. Procédé de production d'un dispositif (10) à utiliser dans la manipulation d'une charge, le procédé comprenant les étapes
d'assemblage (S2) de composants individuels (143 149, 122 à 125; 35, 36, 38) de sorte qu'ils forment ensemble un échafaudage tridimensionnel au niveau duquel est prévu au moins un moyen de montage (111, 121, 131) pour un moyen de manipulation (17) permettant de manipuler une partie qui est utilisable dans la production d'un objet (2) et qui est prévu en tant que la charge, dans lequel au moins une partie des composants individuels (143 à 149, 122 à 125, 35, 36, 38) sont des éléments plans qui comprennent au moins un moyen formant bouchon (30, 31) avec lequel les composants individuels (143 à 149, 122 à 125, 35, 36, 38) sont assemblés en tant que l'échafaudage tridimensionnel,
de fixation (S3) d'un matériau de fibres autour de l'échafaudage tridimensionnel,
d'application (S4) d'une résine au matériau de fibres et,
de durcissement (S5) du composite résine/matériau de fibres en tant que plastique renforcé de fibres en tant que revêtement (15) de l'échafaudage.

12. Procédé selon la revendication 11, dans lequel l'étape d'assemblage (S2) est exécutée sans outil et dans laquelle étape des moyens formant bouchon de verrouillage (30, 31) des composants individuels (143, 144, 122 à 125, 35, 36, 38) sont montés par liaison de forme en tant que l'échafaudage tridimensionnel.

13. Procédé selon la revendication 11 ou 12, comprenant en outre une étape de découpe (S1), avec un laser et/ou un moyen de fraisage et/ou un moyen de poinçon et/ou un moyen de découpe au jet d'eau, de multiples composants individuels à partir d'un matériau de base plan.

14. Procédé selon l'une des revendications 11 à 13, dans lequel l'étape de fixation (S3) de matériau de fibres comprend le recouvrement de l'échafaudage tridimensionnel avec un matériau de fibres tubulaire.

15. Procédé selon l'une des revendications 11 à 14, dans lequel l'étape de fixation (S3) de matériau de fibres est exécutée de sorte que les ouvertures (141, 142, 112) soient autonomes, lesquelles servent à fixer le dispositif (10) à un dispositif de déplacement (20) permettant de déplacer le dispositif (10) dans l'espace.
